(19) Europäisches Patentamt
European Patent Office
Office européen des brevets

(11) **EP 2 661 035 B1**

(12) **FASCICULE DE BREVET EUROPEEN**

(45) Date de publication et mention
de la délivrance du brevet:
**20.08.2014 Bulletin 2014/34**

(51) Int Cl.:
***H04L 27/00*** *(2006.01)*

(21) Numéro de dépôt: **13166350.2**

(22) Date de dépôt: **03.05.2013**

(54) **Détection d'une sous bande de fréquence dans une bande de fréquence**

Detektion eines Frequenz-sub-bands in einem Frequenzband

Detecting a sub-band in a frequency band

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **04.05.2012 FR 1254118**

(43) Date de publication de la demande:
**06.11.2013 Bulletin 2013/45**

(73) Titulaire: **COMMISSARIAT A L'ENERGIE
ATOMIQUE ET AUX
ENERGIES ALTERNATIVES
75015 Paris (FR)**

(72) Inventeurs:
• **Gautier, Matthieu
38240 MEYLAN (FR)**

• **Berg, Vincent
38240 MEYLAN (FR)**

(74) Mandataire: **Regimbeau
20, rue de Chazelles
75847 Paris Cedex 17 (FR)**

(56) Documents cités:
• **MATTHIEU GAUTIER ET AL: "Teager-Kaiser
energy detector for narrowband wireless
microphone spectrum sensing", COGNITIVE
RADIO ORIENTED WIRELESS
NETWORKS&COMMUNICATIONS
(CROWNCOM), 2010 PROCEEDINGS OF THE
FIFTH INTERNATIONAL CONFERENCE ON,
IEEE, PISCATAWAY, NJ, USA, 9 juin 2010
(2010-06-09), pages 1-5, XP031757363, ISBN:
978-1-4244-5885-1**

**Description**

DOMAINE TECHNIQUE GENERAL

L'invention concerne le domaine de la radio cognitive et en particulier la détection d'une sous bande de fréquence dans une bande de fréquence analysée afin notamment de détecter un équipement de communication occupant la sous bande de fréquence.

ETAT DE LA TECHNIQUE

Une radio cognitive est un système de télécommunication capable de configurer ses paramètres radio en fonction de son environnement.

Une application prometteuse de la radio cognitive consiste en l'amélioration de l'occupation du spectre en recourant à une gestion du spectre dynamique.

Ainsi, une radio cognitive peut détecter si une portion du spectre est utilisée ou non et temporairement l'occuper sans créer d'interférence aux autres utilisateurs.

Comme tout système radio fréquence, la radio cognitive doit se conformer aux règles dictées par les organismes de régulation du spectre.

Aujourd'hui, ces organismes (notamment la « *Federal Communications Commission* » (FCC) aux Etats-Unis) commencent à autoriser l'utilisation de radio cognitive dans les bandes libérées par le dividende numérique. On peut à se titre se référer au document FCC : « Second Memorandum Opinion and Order », septembre 2010. On parle dans ce cas d'espace vide entre les zones de couverture des stations de télévision. (en anglais, « *TV white space* »).

Dans les bandes UHF (c'est-à-dire Ultra Haute Fréquences, fréquences comprises entre 300 MHz et 3000 MHz, notamment entre 470 MHz et 790 MHz (bandes TV-UHF)) les utilisateurs primaires, c'est-à-dire les utilisateurs pour lesquels une licence d'accès au spectre est octroyée, sont la télévision numérique et les microphones sans fil. Il est envisagé que ces utilisateurs primaires, soient prioritaires par rapport aux nouveaux systèmes cognitifs. Le partage du spectre est donc effectué en privilégiant la qualité de service et donc le signal de ces utilisateurs primaires. On dit alors qu'il faut protéger le système primaire des systèmes secondaires cognitifs. En pratique, les utilisateurs primaires correspondent aux utilisateurs ayant un accès prioritaire au spectre.

Si les systèmes de télévisions numériques peuvent être protégés efficacement par la définition d'une base de données et sa consultation par géolocalisation, cette solution est difficilement applicable aux microphones sans-fil, leur nombre important et leur déploiement aléatoire rendent la mise à jour d'une base de données impossible.

La détection de spectre est donc toujours la solution pour protéger les microphones.

Contrairement à la détection de signaux de télévision numérique, qui peut utiliser les caractéristiques cyclostationnaires de la modulation OFDM, la détection du spectre de microphones sans fil est difficile en raison du peu de caractéristiques a priori de son signal.

On connait des solutions fondées sur des détecteurs aveugles (voir le document H.-S. Chen, W. Gao, and D. Daut, « Spectrum sensing for wireless microphone signals », IEEE Sensor, Mesh and Ad Hoc Communications and Networks Workshops (SECON08), juin 2008). Ces solutions sont fondées sur une décomposition en valeurs propres (voir le document S. Xu, Y. Shang, and H. Wang, « SVD based Sensing of a Wireless Microphone Signal in Cognitive Radio Networks », IEEE International Conference on Communications Systems, novembre 2008), une corrélation spectrale (voir le document N. Han, S. H. Shon, J. O. Joo, and J. M. Kim, "Spectral correlation based signal détection method for spectrum sensing in IEEE 802.22 WRAN systems », International Conference on Advanced Communication Technology, février 2006) ou un détecteur d'énergie (voir le document M. Ghosh, V. Gaddam, G. Turkenich, and K. Challapali, « Spectrum Sensing Prototype for Sensing ATSC and Wireless Microphone Signals », International Conference on Cognitive Radio Oriented Wireless Networks and Communications (CROWNCOM08), mai 2008).

Une des propriétés communes de ces algorithmes est qu'ils supposent la détection de signaux à large bande. Cependant, la bande de télévision européenne est composée de 48 canaux de 8 MHz de bande passante. Chaque bande doit être analysée pour la détection des microphones. Leur détection est donc effectuée dans un contexte bande étroite si on compare l'occupation spectrale des microphones (environ 100-200 kHz) à la largeur d'un canal UHF (8MHz).

Pour résoudre ce problème des solutions larges bandes sont connues. Le document WO 2009130372 décrit une telle solution large bande pour la détection d'un signal à bande étroite.

Les solutions larges bandes connues n'ont pas donné satisfaction : elles ne sont pas assez précises.

Il existe par conséquent un besoin de proposer une solution pour détecter un signal dans un signal large bande.

PRESENTATION DE L'INVENTION

L'invention propose un procédé de détection d'une sous bande de fréquence plus étroite que la bande de fréquence analysée.

A cet effet, l'invention propose un procédé de détection d'un signal dans une sous-bande de fréquence d'une bande de fréquence d'un signal acquis $y(t)$, le procédé comprenant :

-    une acquisition du signal $y(t)$ dans une bande de fréquence ;
-    une analyse fréquentielle dudit signal acquis $y(t)$

pour obtenir au moins un signal fréquentiel $Y$ à $N_{FFT}$ composantes fréquentielles ;

- un découpage en $M$ sous-bandes de fréquence $i$ de taille $N$ du signal fréquentiel $Y$, la taille de chaque sous-bande de fréquence étant fonction de la largeur de bande du signal à détecter ;

- une détermination, dans le domaine fréquentiel, pour chaque sous-bande de fréquence, d'un critère $T_i$, $i = 1,..., M$ fonction de l'énergie du signal dans la sous-bande de fréquence $i$ et du coefficient deux de la fonction d'autocorrélation du signal dans la sous-bande de fréquence $i$ défini par la fonctionielle suivante:

$$C_y^i[2] = \sum_{v=0}^{N-1} Y(v) Y^*(v) e^{j2\pi \frac{v}{N} 2} \; ;$$

- une décision, en fonction du critère $T_i$, pour déterminer si un signal est détecté dans la sous bande $i$.

Le procédé de l'invention peut avantageusement être complété par les caractéristiques suivantes, prises seules ou en une quelconque de leur combinaison techniquement possible :

- l'analyse fréquentielle consiste à :

  o découper le signal acquis dans le domaine temporel en $N_t > 1$ blocs de $N_{FFT}$ échantillons ;
  o effectuer une conversion série/parallèle de chacun des $N_t$ blocs pour obtenir $N_{FFT}$ échantillons parallèles ;
  o déterminer, pour chacun des $N_t$ blocs, la transformée de Fourier de chacun des $N_t$ blocs pour obtenir le signal fréquentiel $Y$ à $N_{FFT}$ composantes fréquentielles pour chacun des $N_t$ blocs.

- on découpe en $M$ sous-bandes de fréquence $i$ de taille $N$ ($N < N_{FFT}$) les $N_{FFT}$ composantes fréquentielles de chacun des $N_t$ blocs, et dans lequel on dispose de $N_t$ critères $T_i$ par sous-bande de fréquence, la décision étant effectuée sur une moyenne des $N_t$ critères $T_i$ de chaque sous-bande de fréquence.

- il comprend un prétraitement des blocs consistant à fixer $N_{FFT}$ tel que $N t x N_{FFT}(1-\alpha)$ est le nombre d'échantillons du signal $y(t)$ temporel découpé où $\alpha$ est un taux de recouvrement entre échantillons adjacents et si $\alpha > 0$, le nombre d'échantillons se recouvrant par FFT est égal à $N_{FFT} x \alpha$ ; si $\alpha < 0$, le nombre d'échantillons supplémentaires par FFT est égal à $N_{FFT} x \alpha$; si $\alpha = 0$, aucun recouvrement ni ajout.

- l'étape de découpage consiste à balayer fréquentiellement la bande de fréquence du signal acquis au moyen d'un fenêtrage glissant en fréquence le long de ladite bande de fréquence.

- la taille $N$ de chaque sous-bande de fréquence $i$ est

définie par $N = \dfrac{N_{FFT}}{M(1-OR)}$, où $OR$ est un taux de chevauchement entre deux sous-bandes adjacentes.

- le critère $T_i$ est défini par

$$T_i = C_y^i[0] - C_y^i[2],$$ avec

$$C_y^i[0] = \sum_{v=0}^{N-1} Y(v) Y^*(v)$$ la fonction

d'autocorrélation du signal dans la sous-bande de fréquence $i$ et

$$C_y^i[2] = \sum_{v=0}^{N-1} Y(v) Y^*(v) e^{j2\pi \frac{v}{N} 2}$$ le

coefficient deux de la fonction d'autocorrélation dans la sous-bande de fréquence $i$.

- il comprend une étape selon laquelle en fonction du résultat de la détection, on alloue à un ou plusieurs équipement(s) de communication une sous bande de fréquence du réseau de télécommunication.

- le signal acquis provient d'un microphone.

L'invention concerne également un dispositif de détection d'un signal dans une sous-bande de fréquence d'une bande de fréquence d'un signal acquis, le dispositif comprenant :

- une unité d'acquisition pour acquérir ledit signal $y(t)$ dans une bande de fréquence ;

- une unité d'analyse fréquentielle pour effectuer une analyse fréquentielle dudit signal acquis $y(t)$ pour obtenir au moins un signal fréquentiel $Y$ à $N_{FFT}$ composantes fréquentielles

- une unité de découpage pour découper en $M$ sous-bandes de fréquence $i$ de taille $N$ le signal fréquentiel, la taille de chaque sous-bande de fréquence étant fonction de la largeur de bande du signal à détecter ;

- au moins une unité de détermination pour déterminer, dans le domaine fréquentiel, pour chaque sous-bande de fréquence un critère $T_i$, $i = 1,..., M$ fonction de l'énergie du signal dans la sous-bande de fréquence $i$ et du coefficient deux de la fonction d'autocorrélation du signal dans la sous-bande de fréquence $i$ défini par la fonctionielle suivante:

$$C_y^i[2] = \sum_{v=0}^{N-1} Y(v) Y^*(v) e^{j2\pi \frac{v}{N} 2} \; ;$$

- au moins une unité de décision pour décider, en fonction du critère $T_i$, si un signal est détecté dans la sous bande $i$.

L'invention concerne en outre un équipement de communication, tel qu'un microphone comprenant un dispositif de détection selon l'invention.

L'invention présente de nombreux avantages.

Comme la détection est effectuée dans le domaine fréquentiel, l'invention permet une analyse large bande où la détection est effectuée sur plusieurs bandes de fréquence plutôt que sur une bande à la fois.

En outre, la détection est plus précise et plus rapide qu'avec les techniques connues.

PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :

- la figure 1 illustre un dispositif de détection selon un mode de réalisation de l'invention ;
- la figure 2 illustre des étapes d'un procédé de détection selon un mode de réalisation de l'invention ;
- la figure 3 illustre des sous-étapes d'une étape d'un procédé de sélection selon un mode de réalisation de l'invention ;
- la figure 4 illustre des performances de détection obtenues au moyen d'un procédé et d'un dispositif selon un mode de réalisation de l'invention.

DESCRIPTION DETAILLEE DE L'INVENTION

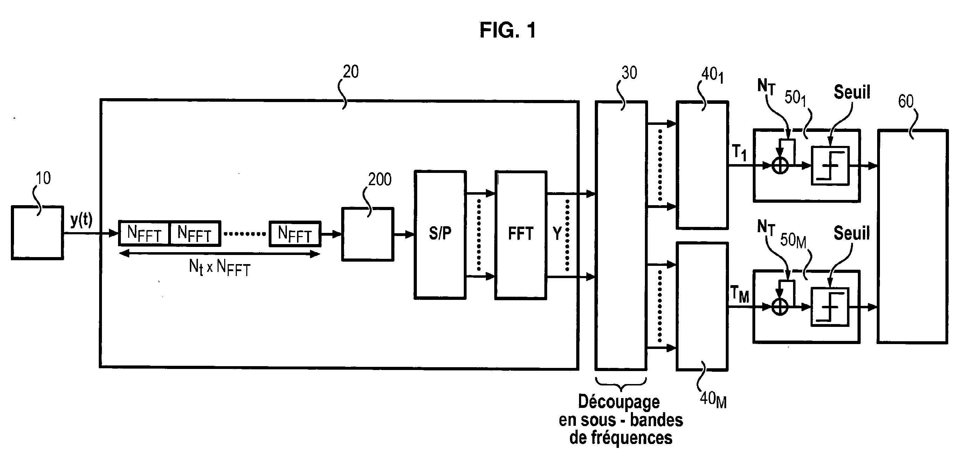

En relation avec la figure 1 un dispositif de détection, selon un mode de réalisation de l'invention, comprend une unité d'acquisition 10 pour acquérir E1 un signal $\gamma(t)$ dans une bande de fréquence.

Le dispositif de détection va permettre de détecter si au moins une sous-bande de fréquence est occupée par exemple par un équipement de communication émettant dans un réseau de télécommunication défini dans la bande UHF.

L'équipement de communication peut être un émetteur de signaux DVB-T de largeur de bande 8MHz ou un microphone sans fil émettant un signal de largeur de bande de 100kHz à 200kHz.

Ainsi, on va détecter si une sous-bande de fréquence de largeur inférieure à la bande du signal $\gamma(t)$ est occupée.

Une fois le signal $\gamma(t)$ acquis, une unité d'analyse fréquentielle 20 effectue l'analyse E2 fréquentielle du signal acquis $\gamma(t)$.

Cette analyse E2 fréquentielle consiste à découper E10 le signal acquis dans le domaine temporel en $N_t$ blocs comprenant $N_{FFT}$ échantillons puis à effectuer E11 bloc par bloc une conversion série/parallèle des

$N_{FFT}$ échantillons au moyen d'un convertisseur série/parallèle.

De manière alternative ou complémentaire, on peut avant la conversion série/parallèle, introduire un chevauchement des échantillons de blocs adjacents ou bien introduire des échantillons supplémentaires entre chaque bloc ou entre chaque composante fréquentielle au moyen d'une unité 200 de prétraitement des blocs.

On fixe par conséquent le nombre $N_{FFT}$ d'échantillons tel que le nombre d'échantillon total soit égal à $Nt$ x $N_{FFT}$ $(1-\alpha)$ où avec $\alpha$ est un taux de recouvrement entre échantillons adjacents et où

- si $\alpha > 0$, le nombre d'échantillons se recouvrant par FFT est égal à $N_{FFT}$ x $\alpha$ ;
- si $\alpha < 0$, le nombre d'échantillons supplémentaires par FFT est égal à $N_{FFT}$ x $\alpha$ ;
- si $\alpha = 0$, aucun recouvrement ni ajout.

On obtient par conséquent $N_t$ blocs de $N_{FFT}$ échantillons parallèles.

Ensuite on détermine E12 la transformée de Fourier de chacun des $N_t$ blocs pour obtenir $N_t$ signaux fréquentiels $Y$ à $N_{FFT}$ composantes fréquentielles.

A l'issue de la détermination de la transformée de Fourier on obtient, pour chacun de ces $N_t$ blocs, le signal

$$Y(\nu) = \sum_{k=0}^{N_{FFT}-1} y[k]e^{-j2\pi\frac{\nu}{N_{FFT}}k},$$

avec $\nu$ l'indice de fréquence.

Une fois l'analyse fréquentielle réalisée, l'objectif du procédé de détection est de déterminer une métrique dans plusieurs sous-bandes qui permet de décider de la présence ou non d'un signal dans la sous-bande et donc de conclure à la présence d'un équipement de communication dans le réseau de télécommunication dans cette sous-bande.

Avant de déterminer les métriques, au moyen d'une unité de découpage 30 on découpe E3 en $M$ sous-bandes de fréquence $i$ de taille $N$ $(N<N_{FFT})$ les $N_{FFT}$ composantes fréquentielles de chacun des $N_t$ blocs, la taille de chaque sous-bande de fréquence étant fonction de la largeur de bande du signal de l'équipement de communication à détecter.

Cette unité de découpage 30 gère la manière de balayer fréquentiellement la bande de fréquence dans laquelle on a acquis le signal.

Ainsi, le découpage E3 consiste à balayer fréquentiellement la bande de fréquence du signal acquis au moyen d'un fenêtrage glissant en fréquence le long de ladite bande de fréquence. Le balayage dans le domaine fréquentiel bénéficie du gain de complexité de la FFT qui est effectuée par bloc sur toute la bande. Le traitement sur chaque sous bande est réalisé à un rythme plus lent (le rythme décimé par $N_{FFT}$) et donc relativement peu complexe. A cela s'ajoute des éléments de flexibilité d'architecture. Le choix de la sous-bande peut se faire de façon dynamique par sélection des tons fréquentiels d'intérêt et peut donc être adapté.

En fonction du signal à détecter, un paramètre du découpage E3 est un taux de chevauchement entre deux bandes de fréquence adjacentes.

Ainsi, la taille $N$ de chaque sous-bande de fréquence $i$ est définie par

$$N = \frac{N_{FFT}}{M(1 - OR)},$$

où $OR$ est le taux de chevauchement entre deux sous-bandes adjacentes.

Les paramètres $M$ et $OR$ sont fixés en fonction du signal à analyser. Par exemple, si une bande de 40 MHz est analysée et un signal DVB-T de 8 MHz est à détecter, M = 5 sous-bandes et un taux de chevauchement nul ($OR$ =0) doivent être utilisés. Si des signaux de microphone sans fil sont recherchés dans une bande de 8 MHz, un chevauchement est nécessaire en raison de la position aléatoire de la fréquence du signal et la bande passante de chaque sous-bande doit être réglé sur 200 kHz. On peut également dans ce cas envisager un taux de chevauchement de 0,5. Une méthode pour choisir le taux de chevauchement optimum est de maximiser la probabilité de détection du signal bande étroite (microphone sans fil) en fonction des contraintes de complexité de calcul du système (plus le taux de chevauchement est élevé, plus la complexité est importante).

A l'issu de ce découpage, au moyen de plusieurs unités de découpage 40i (i=1,...,M), on détermine E4, dans le domaine fréquentiel, pour chaque sous-bande de fréquence $i$ un critère $T_i$, $i$ = 1,..., $M$ fonction de l'énergie du signal dans la sous-bande de fréquence $i$ et du coefficient 2 de la fonction d'autocorrélation du signal dans la sous-bande de fréquence $i$. Ainsi on dispose de $N_t$ critères par sous-bande $i$ de fréquence.

Ce critère $T_i$ est la version fréquentielle du critère de Teager-Kaiser. A ce titre on pourra se référer aux documents M. Gautier, M. Laugeois and D. Noguet : "Teager-Kaiser energy detector for narrowband wireless microphone spectrum sensing", dans Proc. of the 5th Int. Conf. Cognitive Radio Oriented Wireless Networks and Communications (CROWNCOM), Cannes, France, Juin 2010 et J. F. Kaiser : "On simple algorithm to calculate the energy of signal," IEEE International Conference on Acoustics, Speech, and Signal Processing (ICASSP90), avril 1990.

Dans le domaine fréquentiel, ce critère s'exprime par :

$$T_i = C_y^i[0] - C_y^i[2]$$

avec $C_y^i[0] = \sum_{v=0}^{N-1} Y(v)Y^*(v)$ la fonction d'autocorrélation du signal dans la sous-bande de fréquence $i$ et $C_y^i[2] = \sum_{v=0}^{N-1} Y(v)Y^*(v)e^{j2\pi\frac{v}{N}2}$ le coefficient 2 de la fonction d'autocorrélation dans la sous-bande de fréquence $i$.

Le critère $T_i$, est alors moyenné sur $N_t$ valeurs, pour rejeter le bruit de la mesure et construire le critère moyen noté $\overline{T}_i$.

Ensuite, par l'intermédiaire d'unité de décisions 50i, on décide (E5), en fonction du critère $\overline{T}_i$, si un équipement émet un signal dans la sous bande $i$. L'unité de décision peut utiliser un seuil $\overline{T}_{REF}$ : si $\overline{T}_i$ est supérieur à $\overline{T}_{REF}$, un signal bande étroite est détecté, sinon aucun signal bande étroite n'est détecté. Le choix de ce seuil peut se faire par simulation en utilisant un critère de fausse détection et de non détection du signal bande étroite (microphone sans fil).

Ainsi, à l'issu de cette étape de décision E5 il est possible de déterminer si des bandes de fréquence $i$ sont libres et éventuellement d'allouer E6 les bandes de fréquence libres à des équipements de communication.

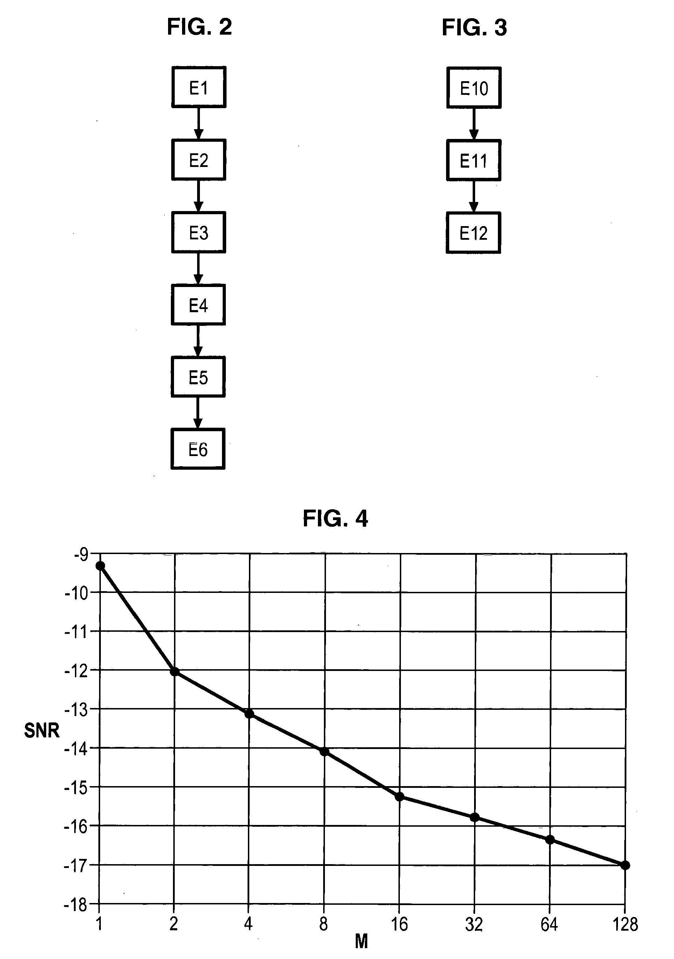

On a illustré sur la figure 4 les performances de détection obtenues par le dispositif et le procédé de l'invention.

On a analysé une bande de fréquence 8 MHz correspondant aux spécifications européennes des bandes UHF. Le signal en bande de base du microphone est émis avec les paramètres suivants :

- le signal modulant à une bande de fréquence de 20 kHz,
- la déviation FM est égale à 3,
- la fréquence porteuse est égale à 100 kHz ; et
- la puissance du bruit est fixé à 0dBm.

Dans ces conditions, le signal transmis a une bande de fréquence de 100 kHz environ.
On fixe $N_t$ à 4096.

Sur la figure 3 est en particulier illustrée la sensibilité de la détection en fonction du nombre de sous bandes.

La sensibilité est le rapport signal à bruit (en anglais, « Signal to Noise Ratio », (SNR)) minimum que le dispositif de détection peut détecter avec une probabilité de détection de 95 % et de fausse alarme de 1 %.

On constate grâce à cette figure que l'on peut détecter des signaux avec une sensibilité de -17dB obtenue pour M=128. Une amélioration de 8dB est ainsi obtenue par rapport à M=1.

**Revendications**

1. Procédé de détection d'un signal dans une sous-bande de fréquence d'une bande de fréquence d'un signal acquis $y(t)$, le procédé comprenant :

   - une acquisition (E1) du signal $\gamma(t)$ dans une bande de fréquence ;
   - une analyse (E2) fréquentielle dudit signal acquis $\gamma(t)$ pour obtenir au moins un signal fréquentiel $Y$ à $N_{FFT}$ composantes fréquentielles ;
   - un découpage (E3) en $M$ sous-bandes de fréquence $i$ de taille $N$ du signal fréquentiel $Y$, la taille de chaque sous-bande de fréquence étant fonction de la largeur de bande du signal à détecter ;
   - une détermination (E4), dans le domaine fréquentiel, pour chaque sous-bande de fréquence, d'un critère $T_i$, $i = 1,..., M$ fonction de l'énergie du signal dans la sous-bande de fréquence $i$ et du coefficient deux de la fonction d'autocorrélation du signal dans la sous-bande de fréquence $i$ défini par la fonctionnelle suivante :

   $$C_y^i[2] = \sum_{v=0}^{N-1} Y(v)Y^*(v)e^{j2\pi\frac{v}{N}2} \; ;$$

   - une décision (E5), en fonction du critère $T_i$, pour déterminer si un signal est détecté dans la sous bande $i$.

2. Procédé selon la revendication précédente, dans lequel l'analyse fréquentielle (E2) consiste à :

   - découper (E10) le signal acquis dans le domaine temporel en $N_t > 1$ blocs de $N_{FFT}$ échantillons ;
   - effectuer (E11) une conversion série/parallèle de chacun des $N_t$ blocs pour obtenir $N_{FFT}$ échantillons parallèles ;
   - déterminer (E12), pour chacun des $N_t$ blocs, la transformée de Fourier de chacun des $N_t$ blocs pour obtenir le signal fréquentiel $Y$ à $N_{FFT}$ composantes fréquentielles pour chacun des $N_t$ blocs.

3. Procédé selon la revendication précédente, dans lequel on découpe (E3) en $M$ sous-bandes de fréquence $i$ de taille $N$ ($N < N_{FFT}$) les $N_{FFT}$ composantes fréquentielles de chacun des $N_t$ blocs, et dans lequel on dispose de $N_t$ critères $T_i$ par sous-bande de fréquence, la décision (E5) étant effectuée sur une moyenne des $N_t$ critères $T_i$ de chaque sous-bande de fréquence.

4. Procédé selon l'une des revendications précédentes, comprenant un prétraitement des blocs consistant à fixer $N_{FFT}$ tel que $Nt \times N_{FFT}(1-\alpha)$ est le nombre d'échantillons du signal $y(t)$ temporel découpé où $\alpha$ est un taux de recouvrement entre échantillons adjacents..

5. Procédé selon la revendication précédente, dans lequel

   - si $\alpha > 0$, le nombre d'échantillons se recouvrant par FFT est égal à $N_{FFT}\alpha$
   - si $\alpha < 0$, le nombre d'échantillons supplémentaires par FFT est égal à $N_{FFT}\alpha$ ;
   - si $\alpha = 0$, aucun recouvrement ni ajout.

6. Procédé selon l'une des revendications précédentes, dans lequel l'étape de découpage (E3) consiste à balayer fréquentiellement la bande de fréquence du signal acquis au moyen d'un fenêtrage glissant en fréquence le long de ladite bande de fréquence.

7. Procédé selon la revendication précédente, dans lequel la taille $N$ de chaque sous-bande de fréquence $i$ est définie par $N = \dfrac{N_{FFT}}{M(1-OR)}$, où OR est un taux de chevauchement entre deux sous-bandes adjacentes.

8. Procédé selon l'une des revendications précédentes, dans lequel le critère $T_i$ est défini par

   $$T_i = C_y^i[0] - C_y^i[2],$$

   avec $C_y^i[0] = \sum_{v=0}^{N-1} Y(v)Y^*(v)$ la fonction d'autocorrélation du signal dans la sous-bande de fréquence $i$ et $C_y^i[2] = \sum_{v=0}^{N-1} Y(v)Y^*(v)e^{j2\pi\frac{v}{N}2}$ le coefficient deux de la fonction d'autocorrélation dans la sous-bande de fréquence $i$.

**9.** Procédé selon l'une des revendications précédentes, comprenant une étape selon laquelle en fonction du résultat de la détection, on alloue (E6) à un ou plusieurs équipement(s) de communication une sous bande de fréquence du réseau de télécommunication.

**10.** Procédé selon l'une des revendications précédentes, dans lequel le signal acquis provient d'un microphone.

**11.** Dispositif de détection d'un signal dans une sous-bande de fréquence d'une bande de fréquence d'un signal acquis, le dispositif comprenant :

- une unité d'acquisition (10) pour acquérir (E1) ledit signal $y(t)$ dans une bande de fréquence ;
- une unité d'analyse fréquentielle (20) pour effectuer une analyse (E2) fréquentielle dudit signal acquis $y(t)$ pour obtenir au moins un signal fréquentiel $Y$ à $N_{FFT}$ composantes fréquentielles
- une unité de découpage (30) pour découper (E3) en $M$ sous-bandes de fréquence $i$ de taille $N$ le signal fréquentiel , la taille de chaque sous-bande de fréquence étant fonction de la largeur de bande du signal à détecter ;
- au moins une unité de détermination (40ᵢ) pour déterminer (E4), dans le domaine fréquentiel, pour chaque sous-bande de fréquence un critère $T_i$, $i = 1,..., M$ fonction de l'énergie du signal dans la sous-bande de fréquence $i$ et du coefficient deux de la fonction d'autocorrélation du signal dans la sous-bande de fréquence $i$ défini par la fonctionielle suivante :

$$C_y^i[2] = \sum_{v=0}^{N-1} Y(v)Y^*(v)e^{j2\pi\frac{v}{N}2} \quad ;$$

- au moins une unité de décision (50ᵢ) pour décider (E5), en fonction du critère $T_i$, si un signal est détecté dans la sous bande $i$.

**12.** Equipement de communication, tel qu'un microphone comprenant un dispositif de détection selon la revendication précédente.

**Patentansprüche**

**1.** Verfahren zur Feststellung eines Signals in einem Frequenzunterband eines Frequenzbandes eines erfassten Signals $y(t)$, wobei das Verfahren aufweist:

- eine Erfassung (E1) des Signals $y(t)$ in einem Frequenzband;
- eine Frequenzanalyse (E2) des erfassten Signals $y(t)$ zur Gewinnung wenigstens eines Frequenzsignals $Y$ mit $N_{FFT}$ Frequenzkomponenten;
- Zerschneiden (E3) des Frequenzsignals $Y$ in $M$ Frequenzunterbänder $i$ der Größe $N$, wobei die Größe eines jeden Frequenzunterbandes abhängig ist der Bandbreite des festzustellenden Signals;
- eine Bestimmung (E4), im Frequenzbereich, für jedes Frequenzunterband eines Kriteriums $T_i$, $i = 1,...,M$ in Abhängigkeit von der Energie des Signals im Frequenzunterband $i$ und dem Koeffizienten zwei der Autokorrelationsfunktion des Signals im Frequenzunterband $i$, definiert durch folgendes Funktional:

$$C_y^i[2] = \sum_{v=0}^{N-1} Y(v)Y^*(v)e^{j2\pi\frac{v}{N}2} \quad ;$$

- eine Entscheidung (E5) in Abhängigkeit vom Kriterium $T_i$ zur Bestimmung, ob ein Signal in dem Unterband $i$ festgestellt wird.

**2.** Verfahren nach dem vorstehenden Anspruch, nach welchem die Frequenzanalyse (E2) besteht aus:

- Zerschneiden (E10) des gewonnenen Signals im Zeitbereich in $N_t > 1$ Blöcke von $N_{FFT}$ Proben;
- Bewirken (E11) einer seriellen/parallelen Umwandlung eines jeden der $N_t$ Blöcke zur Gewinnung von $N_{FFT}$ parallelen Proben;
- Bestimmen (E12), für jeden der $N_t$ Blöcke, der Fouriertransformierten eines jeden der $N_t$ Blöcke zur Gewinnung des Frequenzsignals $Y$ mit $N_{FFT}$ Frequenzkomponenten für jeden der $N_t$ Blöcke.

**3.** Verfahren nach dem vorstehenden Anspruch, nach welchem die $N_{FFT}$ Frequenzkomponenten eines jeden der $N_t$ Blöcke in $M$ Frequenzunterbänder $i$ der Größe $N$ ($N < N_{FFT}$) unterteilt werden, und nach welchem über $N_t$ Kriterien $T_i$ pro Frequenzunterband verfügt wird, wobei die Entscheidung (E5) auf einem Mittelwert von $N_t$ Kriterien $T_i$ eines jeden Frequenzunterbandes getroffen wird.

**4.** Verfahren nach einem der vorstehenden Ansprüche, aufweisend eine Vorbehandlung der Blöcke, die darin besteht, $N_{FFT}$ so festzulegen, dass $N_t$ x $N_{FFT}$ $(1-\alpha)$ die Anzahl von Proben des abgeschnittenen Zeitsignals $y(t)$ ist, wobei $\alpha$ ein Überdeckungsgrad zwischen benachbarten Proben ist.

**5.** Verfahren nach dem vorstehenden Anspruch, nach welchem

- wenn $\alpha > 0$, die Anzahl sich pro *FFT* überdeckender Proben gleich $N_{FFT}\alpha$ ist;
- wenn $\alpha < 0$, die Anzahl zusätzlicher Proben pro *FFT gleich* $N_{FFT}\alpha$ ist;
- wenn $\alpha = 0$, keine Überdeckung, kein Zusatz.

**6.** Verfahren nach einem der vorstehenden Ansprüche, nach welchem der Abschneidschritt (E3) in einem frequenziellen Überstreichen des Frequenzbandes des erfassten Signals mittels einer in der Frequenz gleitenden Befensterung längs des Frequenzbandes besteht.

**7.** Verfahren nach dem vorstehenden Anspruch, nach welchem die Größe $N$ eines jeden Frequenzunterbandes $i$ definiert ist durch $N = \dfrac{N_{FFT}}{M(1-OR)}$,

wobei *OR* ein Überlappungsgrad zwischen zwei benachbarten Unterbändern ist.

**8.** Verfahren nach einem der vorstehenden Ansprüche, nach welchem das Kriterium $T_i$ definiert ist durch

$$T_i = C_y^i[0] - C_y^i[2],$$

mit $C_y^i[0] = \sum_{v=0}^{N-1} Y(v)Y^*(v)$ der Autokorrelationsfunktion des Signals im Frequenzunterband $i$

und $C_y^i[2] = \sum_{v=0}^{N-1} Y(v)Y^*(v)e^{j2\pi\frac{v}{N}2}$ dem

Koeffizienten zwei der Autokorrelationsfunktion im Frequenzunterband $i$.

**9.** Verfahren nach einem der vorstehenden Ansprüche, aufweisend einen Schritt, nach welchem in Abhängigkeit vom Feststellungsresultat einer oder mehreren Kommunikationseinrichtungen ein Frequenzunterband des Telekommunikationsnetzes zugeteilt wird (E6).

**10.** Verfahren nach einem der vorstehenden Ansprüche, nach welchem das gewonnene Signal von einem Mikrofon stammt.

**11.** Vorrichtung zur Feststellung eines Signals in einem Frequenzunterband eines Frequenzbandes eines erfassten Signals, wobei die Vorrichtung aufweist:

- eine Erfassungseinheit (10) zur Erfassung (E1) des Signals $y(t)$ in einem Frequenzband;
- eine Frequenzanalyseeinheit (20) zur Bewirkung einer Frequenzanalyse (E2) des erfassten Signals $y(t)$ zur Gewinnung wenigstens eines Frequenzsignals $Y$ mit $N_{FFT}$ Frequenzkomponenten;
- eine Zerschneideinheit (30) zum Zerschneiden (E3) des Frequenzsignals in $M$ Frequenzunterbänder $i$ der Größe $N$, wobei die Größe eines jeden Frequenzunterbandes abhängig ist von der Bandbreite des festzustellenden Signals;
- wenigstens eine Bestimmungseinheit (40$_i$) zur Bestimmung (E4), im Frequenzbereich für jedes Frequenzunterband eines Kriteriums $T_i$, $i = 1,...,M$ in Abhängigkeit von der Energie des Signals im Frequenzunterband $i$ und dem Koeffizienten zwei des Autokorrelationsfunktion des Signals in dem Frequenzunterband $i$, definiert durch folgendes Funktional:

$$C_y^i[2] = \sum_{v=0}^{N-1} Y(v)Y^*(v)e^{j2\pi\frac{v}{N}2}\ ;$$

- wenigstens eine Entscheidungseinheit (50$_i$) zur Entscheidung (E5), in Abhängigkeit von dem Kriterium $T_i$, ob ein Signal in dem Unterband $i$ festgestellt wird.

**12.** Kommunikationseinrichtung, wie etwa ein Mikrofon, aufweisend eine Feststellungsvorrichtung nach dem vorstehenden Anspruch.

**Claims**

**1.** A process for detection of a signal in a frequency sub-band of a frequency band of an acquired signal $y(t)$, the process comprising:

- acquisition (E1) of the signal $y(t)$ in a frequency band;
- frequential analysis (E2) of said acquired signal $y(t)$ to obtain at least one frequential signal $Y$ with $N_{FFT}$ frequential components;
- breakdown (E3) into $M$ frequency sub-bands $i$ of size $N$ of the frequential signal $Y$, the size of each frequency sub-band being a function of the bandwidth of the signal to be detected;

- determination (E4), in the frequential domain, for each frequency sub-band, of a criterion $T_i$, $i=1,...,M$ as a function of the energy of the signal in the frequency sub-band $i$ and of the coefficient two of the autocorrelation function of the signal in the frequency sub-band $i$ defined by the following functional:

$$C_y^i[2] = \sum_{v=0}^{N-1} Y(v)Y^*(v)e^{j2\pi\frac{v}{N}2} \; ;$$

- decision (E5), as a function of the criterion $T_i$, to determine whether a signal is detected in the sub-band $i$.

2. The process according to the preceding claim, wherein frequential analysis (E2) consists of:

   - breaking down (E10) the acquired signal in the time field into $N_t > 1$ blocks of $N_{FFT}$ samples;
   - operating (E11) serial to parallel conversions (E11) of each of the $N_t$ blocks to obtain $N_{FFT}$ parallel samples;
   - determining (E12), for each of the $N_t$ blocks, the Fourier transform of each of the $N_t$ blocks to obtain the frequential signal $Y$ with $N_{FFT}$ frequential components for each of the $N_t$ blocks.

3. The process according to the preceding claim, wherein the $N_{FFT}$ frequential components of each of the $N_t$ blocks are broken down (E3) into $M$ frequency sub-bands $i$ of size $N$ ($N < N_{FFT}$), and wherein there are $N_t$ criteria $T_i$ per frequency sub-band, the decision (E5) being made on an average of $N_t$ criteria $T_i$ of each frequency sub-band.

4. The process according to one of the preceding claims, comprising pre-processing of blocks comprising fixing $N_{FFT}$ such that $N_t x N_{FFT}(1-\alpha)$ is the number of samples of the broken down time signal $y(t)$ where $\alpha$ is a recovery rate between adjacent samples.

5. The process according to the preceding claim, wherein

   - if $\alpha > 0$, the number of samples being covered by FFT is equal to $N_{FFT}\alpha$
   - if $\alpha < 0$, the number of additional samples per FFT is equal to $N_{FFT}\alpha$ ;
   - if $\alpha = 0$, neither recovery nor addition.

6. The process according to one of the preceding claims, wherein the breakdown step (E3) consists of frequentially scanning the frequency band of the acquired signal by means of a window sliding in frequency along said frequency band.

7. The process according to the preceding claim, wherein the size $N$ of each frequency sub-band $i$ is defined by $N = \dfrac{N_{FFT}}{M(1-OR)}$, where OR is

an overlapping rate between two adjacent sub-bands.

8. The process according to one of the preceding claims, wherein the criterion $T_i$ is defined by

$$T_i = C_y^i[0] - C_y^i[2] \;,$$

with $C_y^i[0] = \sum_{v=0}^{N-1} Y(v)Y^*(v)$ the auto-correlation function of the signal in the frequency sub-band $i$ and

$$C_y^i[2] = \sum_{v=0}^{N-1} Y(v)Y^*(v)e^{j2\pi\frac{v}{N}2} \quad \text{the}$$

coefficient two of the autocorrelation function in the frequency sub-band $i$.

9. The process according to one of the preceding claims, comprising a step according to which as a function of the result of detection one or more items of communications equipment is allocated (E6) a frequency sub-band of the telecommunications network.

10. The process according to one of the preceding claims, wherein the acquired signal originates from a microphone.

11. A device for detection of a signal in a frequency sub-band of a frequency band of an acquired signal, the device comprising:

   - an acquisition unit (10) for acquiring (E1) said signal $y(t)$ in a frequency band;
   - a frequential analysis unit (20) for conducting frequential analysis (E2) of said acquired signal $y(t)$ to obtain at least one frequential signal $Y$ with $N_{FFT}$ frequential components
   - a breakdown unit (30) for breaking down (E3) into $M$ frequency sub-bands $i$ of size $N$ the frequential signal, the size of each frequency sub-band being a function of the bandwidth of the signal to be detected;
   - at least one determination unit ($40_i$) to determine (E4), in the frequential domain, for each frequency sub-band a criterion $T_i$, $i=1,...,M$ as a function of the energy of the signal in the frequency sub-band $i$ and of the coefficient two of the autocorrelation function of the signal in the frequency sub-band $i$ defined by the following functional:

$$C_y^i[2] = \sum_{\nu=0}^{N-1} Y(\nu)Y^*(\nu)e^{j2\pi\frac{\nu}{N}2} \; ;$$

- at least one decision unit ($50_i$) for deciding (E5), as a function of the criterion $T_i$, if a signal is detected in the sub-band $i$.

12. Communications equipment such as a microphone comprising a device for detection, according to the preceding claim.

FIG. 1

Découpage
en sous - bandes
de fréquences

EP 2 661 035 B1

## FIG. 2

## FIG. 3

## FIG. 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2009130372 A

**Littérature non-brevet citée dans la description**

- Second Memorandum Opinion and Order. *FCC,* Septembre 2010
- **H.-S. CHEN ; W. GAO ; D. DAUT.** Spectrum sensing for wireless microphone signals. *IEEE Sensor, Mesh and Ad Hoc Communications and Networks Workshops (SECON08),* Juin 2008
- **S. XU ; Y. SHANG ; H. WANG.** SVD based Sensing of a Wireless Microphone Signal in Cognitive Radio Networks. *IEEE International Conference on Communications Systems,* Novembre 2008
- **N. HAN ; S. H. SHON ; J. O. JOO ; J. M. KIM.** Spectral correlation based signal détection method for spectrum sensing in IEEE 802.22 WRAN systems. *International Conference on Advanced Communication Technology,* Février 2006
- **M. GHOSH ; V. GADDAM ; G. TURKENICH ; K. CHALLAPALI.** Spectrum Sensing Prototype for Sensing ATSC and Wireless Microphone Signals. *International Conference on Cognitive Radio Oriented Wireless Networks and Communications (CROWNCOM08),* Mai 2008
- **M. GAUTIER ; M. LAUGEOIS ; D. NOGUET.** Teager-Kaiser energy detector for narrowband wireless microphone spectrum sensing. *Proc. of the 5th Int. Conf. Cognitive Radio Oriented Wireless Networks and Communications (CROWNCOM),* Juin 2010
- **J. F. KAISER.** On simple algorithm to calculate the energy of signal. *IEEE International Conference on Acoustics, Speech, and Signal Processing (ICASSP90),* Avril 1990